# EUROPÄISCHE PATENTSCHRIFT

(11) **EP 1 913 404 B1**
(45) Veröffentlichungstag und Bekanntmachung des Hinweises auf die Patenterteilung: **11.12.2013**
(21) Anmeldenummer: 06764319.7
(22) Anmeldetag: 10.08.2006
(51) Int. Cl.: G01P 3/489, B60T 8/88

(54) **SCHALTUNGSANORDNUNG UND VERFAHREN ZUR ÜBERWACHUNG VON RADDREHZAHLSENSOREN IN EINEM KRAFTFAHRZEUGSTEUERGERÄT**
CIRCUIT ARRANGEMENT AND METHOD FOR MONITORING WHEEL SPEED SENSORS IN A MOTOR VEHICLE CONTROL DEVICE
CIRCUIT ET PROCEDE POUR CONTROLER DES CAPTEURS DE VITESSE DE ROUE DANS UN APPAREIL DE COMMANDE D'UN VEHICULE AUTOMOBILE

(30) Priorität: 10.08.2005 DE 102005038054; 10.08.2006 DE 102006037619
(43) Veröffentlichungstag der Anmeldung: 23.04.2008
(73) Patentinhaber: Continental Teves AG & Co. oHG, 60488 Frankfurt am Main (DE)
(72) Erfinder: TRAPP, Rene, 61449 Steinbach (DE); MICHEL, Frank, 61191 Rosbach v. d. Höhe (DE)
(74) Vertreter: Brand, Markus
(86) Internationale Anmeldenummer: PCT/EP2006/065211
(87) Internationale Veröffentlichungsnummer: WO 2007/017523

(56) Entgegenhaltungen:
- WO-A-00/22441
- DE-A1- 4 414 980
- DE-A1- 19 812 486

## Beschreibung

Die Erfindung betrifft eine Schaltungsanordnung gemäß Oberbegriff von Anspruch 1 und ein Verfahren zur Überwachung und Abschaltung mindestens eines Raddrehzahlsensors gemäß Oberbegriff von Anspruch 6 sowie die Verwendung der Schaltungsanordnung und des Verfahrens.

Es sind Schaltungsanordnungen zur Signalverarbeitung für Raddrehzahlsensoren bekannt, in denen die Sensorströme insbesondere im Fall von Überströmen begrenzt werden. Überströme auf Sensorkanälen können sich unter anderem aus Kurzschlüssen oder durch ungewollte Einkopplungen der Energieversorgung, beispielsweise durch Isolationsdefekte, ergeben.

Aus der DE 198 12 486 A1 ist eine Auswerteschaltung für elektronische Signalgeber mit einer Stromschnittstelle bekannt. Die Auswerteschaltung wandelt den vom Signalgeber abgegebenen Signalstrom mittels eines elektrischen Widerstands in eine Signalspannung um. Weiterhin wird der Signalstrom über einen Strom-Sense-FET geführt, dessen Sense-Ausgang mit dem Widerstand verbunden ist.

Die DE 44 14 980 A1 offenbart eine Schaltungsanordnung für eine Bremsanlage mit elektronischer Regelung der Bremskraftverteilung auf die Radbremsen der Vorder- und der Hinterachse sowie mit einer elektronischen Blockierschutz- und/oder Antriebsschlupfregelung. Die Bremsanlage umfasst weiterhin elektrisch steuerbare Hydraulikventile, Radsensoren zur Ermittlung des Drehverhaltens der Räder, elektrische Schaltungen zur Auswertung der Sensorsignale der Radsensoren und Schaltungen zur Überwachung der Bremsanlage und zur teilweisen oder vollständigen Abschaltung oder zur Umschaltung der Regelung in Abhängigkeit von Defekten, Fehlfunktionen oder von der jeweiligen Regel- oder Fahrsituation. Bei Ausfall eines Sensors oder bei einem fehlerhaften Sensorsignal wird eine Fahrzeugreferenzgeschwindigkeit auf Basis der verbliebenen intakten Sensoren gebildet, eine EBV-Funktion weiterhin zugelassen, eine ABS- oder ASR-Funktion hingegen eingeschränkt oder unterbunden. Auch bei einem Absinken der Versorgungsspannung unter einen vorgegebenen Grenzwert wird solange die Versorgungsspannung noch über einem zweiten, niedrigeren Grenzwert liegt, ebenfalls die EBV-Funktion weiterhin zugelassen, die ABS- oder ASR-Funktion wird hingegen eingeschränkt oder unterbunden.

Druckschrift WO 00/22441 schlägt eine Schaltungsanordnung zur Signalverarbeitung für einen Raddrehzahlsensor vor, welche ein Schaltungsteil zur Strombegrenzung aufweist. Im Fall, dass Überströme beziehungsweise unzulässig hohe Ströme auf einem Raddrehzahlsensorkanal erkannt werden, wird der Strom auf diesem Sensorkanal begrenzt. Obwohl eine Strombegrenzung einen gewissen Schutz der elektronischen Bauelemente gewährleistet, werden diese Bauelemente, insbesondere integrierte Schaltungen, durch Fehlerströme relativ stark erwärmt. Diese Verlustwärme muss durch geeignete Maßnahmen, wie beispielsweise Kühlbleche und/oder Lüfter, abgeführt werden. Dennoch kann diese Verlustwärme die elektronischen Bauelemente, insbesondere integrierte Schaltungen, schleichend schädigen. Dies ist besonders dann möglich, wenn beispielsweise ein Überstromfehler durch das Kraftfahrzeugsteuergerät erkannt wurde, die entsprechende Funktion nicht mehr zur Verfügung steht und der Fahrer durch eine Warnlampe über das Vorliegen eines Defekts informiert wurde, aber der Fahrer sich dennoch entschließt, eine längere Strecke zu fahren beziehungsweise eine längere Reise fortzusetzen.

Die Aufgabe der vorliegenden Erfindung besteht darin, eine Schaltungsanordnung und ein Verfahren anzugeben, wodurch Überströme in Sensorkanälen erkannt werden und das Auftreten solcher Überströme über einen längeren Zeitraum vermieden wird.

Diese Aufgabe wird erfindungsgemäß gelöst durch die Schaltungsanordnüng gemäß Anspruch 1 und das Verfahren gemäß Anspruch 6.

Dabei wird das mindestens eine Statussignal der jeweiligen Status-Treiberstufe der mindestens einen Schaltungsanordnung durch die elektronische Datenverarbeitungseinheit (MCU), welche insbesondere strukturell von der Schaltungsanordnung getrennt ist und dazu ausgelegt ist Programme abzuarbeiten, ausgewertet, wobei im Fall, dass das mindestens eine Status-signal mindestens einen definierten Zeitraum und/oder eine definierte Anzahl von Regelungszyklen einen Überstromfehler identifiziert, die elektronische Datenverarbeitungseinheit (MCU) ein Abschalten dieses/dieser Raddrehzahlsensor/s/en und/oder eine Abschaltung aller Raddrehzahlsensoren veranlasst, insbesondere indem die mindestens eine Sperrschaltung des/der mindestens einen Raddrehzahlsensorkanals/kanäle so angesteuert wird, dass der mindestens eine Raddrehzahlsensorkanal gesperrt wird. Durch diese Verfahrensmaßnahmen können Schwankungen in der Stromamplitude mindestens eines Raddrehzahlsensorkanals für die Beurteilung eines Überstroms herausgefiltert werden, so dass nicht bei kurzeitigen Stromspitzen eine Abschaltung des mindestens einen Raddrehzahlsensors vorgenommen wird.

Die erfindungsgemäße Schaltungsanordnung und das erfindungsgemäße Verfahren haben unter anderem den Vorteil dass wegen der Stromunterbrechung eine Erwärmung durch Überströme vermieden werden kann. Dadurch sinkt die Verlustleistung der Raddrehzahlsensoren und der mit diesen verbundenen Schaltungen, wodurch Überlastungen, insbesondere schleichende Schädigungen, vermieden werden können und/oder auf zusätzliche Kühlmaßnahmen verzichtet werden kann.

Vorzugsweise wird mindestens eine Schaltungsanordnung für mindestens einen Raddrehzahlsensor des Fahrzeugs verwendet. Insbesondere wird jeweils eine Schaltungsanordnung für jeden im Fahrzeug vorhandenen Raddrehzahlsensor verwendet und besonders bevorzugt werden diese Schaltungsanordnungen in einem elektrischen Steuergerät, ganz besonders bevorzugt in einer elektronischen Leistungseinheit (PCU) dieses Steuergeräts angeordnet. Alternativ wird insbesondere entweder eine Schaltungsanordnung für alle Raddrehzahlsensoren des Fahrzeugs verwendet oder zwei Schaltungsanordnungen für jeweils zwei Raddrehzahlsensoren des Fahrzeugs verwendet. Dabei kann eine Erfassung und Bewertung des Stroms für jeweils einen oder alle und/oder mindestens einen Raddrehzahlsensorkanal vorgenommen werden und eine Abschaltung durch die mindestens eine Schaltungsanordnung für mindestens einen Raddrehzahlsensor durch Sperren des mindestens einen jeweiligen Raddrehzahlsensorkanals vorgenommen werden.

Es ist zweckmäßig, dass die mindestens eine Schaltungsanordnung und/oder mindestens ein Raddrehzahlsensor, insbesondere zusätzlich, einen Temperatursensor aufweis/t/en, wobei eine Bewertung und Identifizierung einer zu hohen Temperatur im Wesentlichen analog zur Bewertung und Identifizierung eines Überstroms vorgenommen wird und die Schaltungsanordnung besonders bevorzugt entsprechende zusätzliche Schaltungselemente aufweist und im Fall dass eine zu hohe Temperatur in definierter Weise identifiziert wird, eine Sperrung des jeweiligen mindestens einen Raddrehzahlsensorkanals vorgenommen wird.

Unter einem Übertragungskanal wird eine Signalleitung und/oder ein logischer Kanal und/oder ein Informationskanal verstanden, wobei auch vorzugsweise mindestens ein Teil des Übertragungskanals als mindestens eine Signalleitung ausgebildet sein kann und ein andere Teil des Übertragungskanals als logischer Kanal und/oder Informationskanal. Insbesondere ist ein Übertragungskanal als Bussystem realisiert und/oder als Signalleitung, welche ihre Informationen über einen Treiber auf einen Bus oder ein Bussystem überträgt. Dabei kann ein Übertragungskanal besonders bevorzugt aus einer beliebigen Kombination aus mindestens einer Signalleitung und mindestens einem logischen Kanal und/oder Informationskanal und mindestens einem Bus und/oder Bussystem bestehen.

Unter einem Raddrehzahlsensorkanal wird der Kanal verstanden über den ein Raddrehzahlsensor mit dem Kraftfahrzeugsteuergerät verbunden ist. Über diesen Kanal werden die Daten des Raddrehzahlsensors an das Kraftfahrzeugsteuergerät übertragen und vorzugsweise wird der Sensor über diesen Kanal aus dem Kraftfahrzeugsteuergerät mit Energie versorgt. Es handelt sich dabei bevorzugt um einen Übertragungskanal, insbesondere um eine Signalleitung, eines Raddrehzahlsensors.

Unter einem elektronischen Steuergerät wird vorzugsweise ein Kraftfahrzeugsteuergerät und/oder die elektronische Kontrolleinheit eines Kraftfahrzeugregelungssystems verstanden. Dabei umfasst dieses elektronische Steuergerät insbesondere eine elektronische Leistungseinheit (PCU), welche unter anderem die Energieversorgung und die Ansteuerung der Leistungselektronik beinhaltet und eine, insbesondere auf einem anderen Halbleiter angeordnete, elektronische Datenverarbeitungseinheit (MCU), in welcher besonders bevorzugt Programme zur Regelung und/oder Steuerung eines Bremssystems abgearbeitet werden.

Erfindungsgemäß ist das mindestens eine Überwachungsmodul so ausgelegt, dass dieses den Strom auf dem, insbesondere jeweiligen, Raddrehzahlsensorkanal erfasst und bewertet.

Vorzugsweise umfasst die Sperrschaltung einen Leistungstransistor, insbesondere ein Mos-FET (Metalloxid-Halbleiter-Feldeffektransistor), durch dessen Drain-Source-Strecke die elektrische Signalleitung des Raddrehzahlsensorkanals verläuft. Hierdurch kann die Sperrschaltung sehr kostengünstig realisiert werden und einfach in Schaltungen integriert werden. Besonders bevorzugt umfasst die Sperrschaltung zusätzlich zu dem Leistungstransistor geeignete elektronische Bauelemente um diesen anzusteuern, ganz besonders bevorzugt eine Treiberstufe zur Ansteuerung des Gateeingangs.

Erfindungsgemäß weist das mindestens eine Überwachungsmodul eine Schaltung zur Strommessung und eine Schaltung zur Bewertung des Stroms auf, sowie eine Status-Treiberstufe, welche ein elektrisches Signal erzeugt, das die Bewertungsinformation bezüglich des Stroms beinhaltet. Insbesondere nimmt diese Status-Treiberstufe nur zwei Zustände an.

Es ist zweckmäßig, dass die Schaltung zur Strommessung einen Shunt und/oder mindestens einen Stromkomparator und/oder mindestens einen Stromspiegel aufweist. Dabei findet die Strommessung insbesondere ständig und/oder zu definierten Zeitpunkten statt.

Vorzugsweise weist die Schaltungsanordnung zur Strommessung und/oder zur Bewertung, zumindest teilweise, mindestens einen Analog-Digital-Wandler, wie beispielsweise einen Komparator, auf.

Es ist zweckmäßig, dass die Schaltung zur Bewertung des Stroms mindestens einen Filter und mindestens einen Komparator aufweist. Insbesondere ist der Filter ein Tiefpass um Schwankungen des Stromwertes oberhalb einer definierten Frequenz herauszufiltern. Der Komparator weist insbesondere drei definierte Amplitudenschwellen für den Strom auf, wobei eine erste den minimal zulässigen Strom definiert, bei dessen Unterschreiten eine Fehlermeldung generiert wird. Eine zweite definierte Amplitudenschwelle korrespondiert mit der üblichen Amplitude des Raddrehzahlsignals und eine dritte definierte Amplitudenschwelle definiert den maximal zulässigen Strom, bei deren Überschreitung ein Überstrom identifiziert wird. Besonders bevorzugt weist der Komparator drei Übertragungskanäle/Signalleitungen zur elektronischen Datenverarbeitungseinheit (MCU) auf, wobei über eine/n erste/n Überträgungskanal/ Signalleitung ein Statussignal für die Unterschreitung eines definierten Stroms und über eine/n zweite/n Übertragungskanal/ Signalleitung das Signal, welches mit der Amplitude des Raddrehzahlsignals korrespondiert übertragen wird und welches die Raddrehzahlinformationen und insbesondere Zusatzinformationen enthält. Ein/e dritte/r Übertragungskanal/ Signalleitung, welche/r ein Statussignal für eine Überschreitung der dritten definierten Amplitudenschwelle ist, ist mit der Status-Treiberstufe verbunden.

Bevorzugt erfolgt das Abschalten des oder der Eingänge automatisch.

Vorzugsweise wird die Schaltungsanordnung, insbesondere Teile und/oder bestimmte Schaltungsmodule der Schaltungsanordnung, getaktet betrieben. Dabei wird besonders bevorzugt das Überwachungsmodul, ganz besonders bevorzugt die Schaltung zur Strommessung und/oder die Schaltung zur Strombewertung und/oder die Status-Treiberstufe, getaktet betrieben.

Es ist zweckmäßig, dass die Schaltungsanordnung für jeweils mindestens einen Raddrehzahlsensorkanal eine Schaltung zur Strombegrenzung aufweist, welche insbesondere so angesteuert wird, dass diese ständig in Bereitschaft ist. Besonders bevorzugt wird ein Halbleiterbauelement, ganz besonders bevorzugt ein Mos-FET, im Signalpfad des Raddrehzahlsensorkanals, welches/r auch zur Strombegrenzung genutzt wird, zum Sperren des jeweiligen Raddrehzahlsensorkanals genutzt und/oder ist Teil der Sperrschaltung der Schaltungsanordnung.

Erfindungsgemäß ist die Schaltungsanordnung an die elektronische Datenverarbeitungseinheit (MCU) angeschlossen ist, welche insbesondere strukturell von der Schaltungsanordnung getrennt ist und dazu ausgelegt ist Programme abzuarbeiten. Hierdurch können die Funktionen der Schaltungsanordnung auch von einem regelungstechnischen Programm, welches in der elektronischen Datenverarbeitungseinheit (MCU) abläuft, angesteuert werden und die Schaltungsanordnung kann der MCU ihrerseits Signale und Daten zur Verfügung stellen.

Erfindungsgemäß sind der Übertragungskanal/ die Signalleitung der Status-Treiberstufe (St1,St2,St,3,St4) und ein Status-Übertragungskanal/ eine Statusleitung der elektronischen Datenverarbeitungseinheit (MCU) an eine Auswerteschaltung angeschlossen, wobei diese Auswerteschaltung insbesondere durch ein UND-Gatter realisiert ist und wobei diese Auswerteschaltung mit mindestens einer Sperrschaltung zur Sperrung des mindestens einen Raddrehzahlsensorkanals verknüpft ist. Dadurch wird erreicht, dass eine Sperrung des entsprechenden Raddrehzahlsensors nur dann stattfindet, wenn sowohl die Schaltungsanordnung als auch die elektronische Datenverarbeitungseinheit einen Überstrom identifizieren und/oder beiderseits definierte Kriterien erfüllt sind, welche eine Abschaltung erforderlich machen. Besonders bevorzugt wird über den Status-Übertragungskanal der elektronischen Datenverarbeitungseinheit (MCU) und/oder über die Signalleitung der Status-Treiberstufe die Auswerteschaltung so angesteuert, dass die mindestens eine Sperrschaltung den jeweiligen Raddrehzahlsensorkanal nicht sperrt. Dabei wird ganz besonders bevorzugt ein Sperrung des mindestens einen Raddrehzahlsensorkanals aufgehoben und/oder mindestens ein Raddrehzahlsensor wieder aktiviert.

Vorzugsweise weist die Schaltungsanordnung eine Status-Treiberstufe für sämtliche Raddrehzahlsensorkanäle auf. So wird bei Erkennung eines Überstroms auf mindestens einem Raddrehzahlsensorkanal ein entsprechendes Statussignal generiert und insbesondere werden entsprechend alle Raddrehzahlsensorkanäle gesperrt.

Es ist zweckmäßig, dass die Schaltungsanordnung so ausgelegt ist, dass die mindestens eine Status-Treiberstufe bei Erzeugung eines Statussignals, welches einen Überstromfehler identifiziert, dauerhaft verriegelt wird und somit dauerhaft das entsprechende Statussignal erzeugt. Hierdurch bleibt die Information über einen festgestellten Überstromfehler erhalten und es wird ein Wiedereinschalten des Raddrehzahlsensors bei insbesondere kurzzeitigem Absinken der Stromamplitude unter einen definierten, kritischen Wert vermieden. Besonders bevorzugt kann die Status-Treiberstufe, ganz besonders bevorzugt über einen, insbesondere zusätzlichen, Übertragungskanal durch die Datenverarbeitungseinheit (MCU), so angesteuert werden, dass sowohl die Verriegelung als auch die Sperrung des Raddrehzahlsensorkanals aufgehoben wird.

Vorzugsweise weist die Schaltungsanordnung mindestens einen, insbesondere zusätzlichen, Übertragungskanal der Datenverarbeitungseinheit (MCU) an die mindestens eine Status-Treiberstufe auf, wobei die jeweilige Status-Treiberstufe dabei über diesen Übertragungskanal so angesteuert werden kann, dass eine Verriegelung der jeweiligen Status-Treiberstufe aufgehoben wird und/oder die jeweilige Status-Treiberstufe ein Statussignal erzeugt, welches keinen Überstromfehler identifiziert. Dadurch wird besonders bevorzugt die jeweilige Sperrschaltung so angesteuert, dass der Raddrehzahlsensorkanal nicht gesperrt ist und/oder freigeschaltet wird und dadurch ganz besonders bevorzugt der entsprechende Raddrehzahlsensor aktiviert wird.

Es ist bevorzugt, dass die mindestens eine Schaltungsanordnung als integrierte Schaltung ausgebildet ist/sind. Insbesondere ist die mindestens eine Schaltungsanordnung auf einem oder mehreren Chips angeordnet. Besonders bevorzugt ist die mindestens eine Schaltungsanordnung mit oder als Teil der elektronischen Leistungseinheit (PCU), ganz besonders bevorzugt zusätzlich mit der elektronischen Datenverarbeitungseinheit (MCU) auf einem Chip angeordnet.

Erfindungsgemäß veranlasst die elektronische Datenverarbeitungseinheit (MCU) ein Anschalten und/oder Wiederanschalten des mindestens einen abgeschalteten Raddrehzahlsensors, insbesondere indem die elektronische Datenverarbeitungseinheit (MCU) die mindestens eine Sperrschaltung des jeweiligen Raddrehzahlsensorkanals so ansteuert, dass die Sperrung des Raddrehzahlsensorkanals aufgehoben wird. Die wieder angeschalteten Raddrehzahlsensoren werden weiter überwacht indem das mindestens eine Statussignal der jeweiligen Status-Treiberstufe durch die elektronische Datenverarbeitungseinheit (MCU) ausgewertet wird und dass im Fall, dass dieses mindestens eine Statussignal mindestens einen definierten Zeitraum und/oder mindestens eine definierte Anzahl von Regelungszyklen einen Überstromfehler identifiziert, die elektronische Datenverarbeitungseinheit (MCU)den entsprechenden Raddrehzahlsensor abschaltet.

Vorzugsweise ist die Schaltungsanordnung so ausgebildet, dass eine Reaktivierung mindestens eines gesperrten Raddrehzahlsensorkanals vorgenommen werden kann. Dies erfolgt insbesondere durch Ansteuerung über ein Programm, mindestens eine digitale Signalleitung bzw. einen Datenbus der elektronischen Datenverarbeitungseinheit (MCU). Hierdurch bleibt es der Regler-Software überlassen, ob der betreffende Raddrehzahlsensorkanal wieder aktiviert wird, oder nicht. Außerdem erhält dadurch die Regler-Software und/oder die elektronische Datenverarbeitungseinheit (MCU) eine Information über den, insbesondere exakten, Zeitpunkt des Wiedereinschaltens. Dies ist wichtig, da die verwendeten Raddrehzahlsensoren je nach Bauart ein spezifisches Einschaltverhalten aufweisen. Ohne die Information über den Wiedereinschaltzeitpunkt können andernfalls Fehlfunktionen auftreten.

Die Erfindung bezieht sich auch auf die Verwendung der Schaltungsanordnung beziehungsweise des erfindungsgemäßen Verfahrens in Kraftfahrzeugen, insbesondere in einem Kraftfahrzeugsteuergerät

Die erfindungsgemäße Schaltungsanordnung sowie das erfindungsgemäße Verfahren sind zur Überwachung des Stroms eines Raddrehzahlsensorkanals und der Sperrung des Raddrehzahlsensorkanals im Fall eines Überstroms geeignet. Die Schaltung ist besonders geeignet zu Integration in integrierte Schaltungen.

Weitere bevorzugte Ausführungsformen ergeben sich aus den abhängigen Ansprüchen und der nachfolgenden Beschreibung eines Ausführungsbeipiels anhand einer Figur.

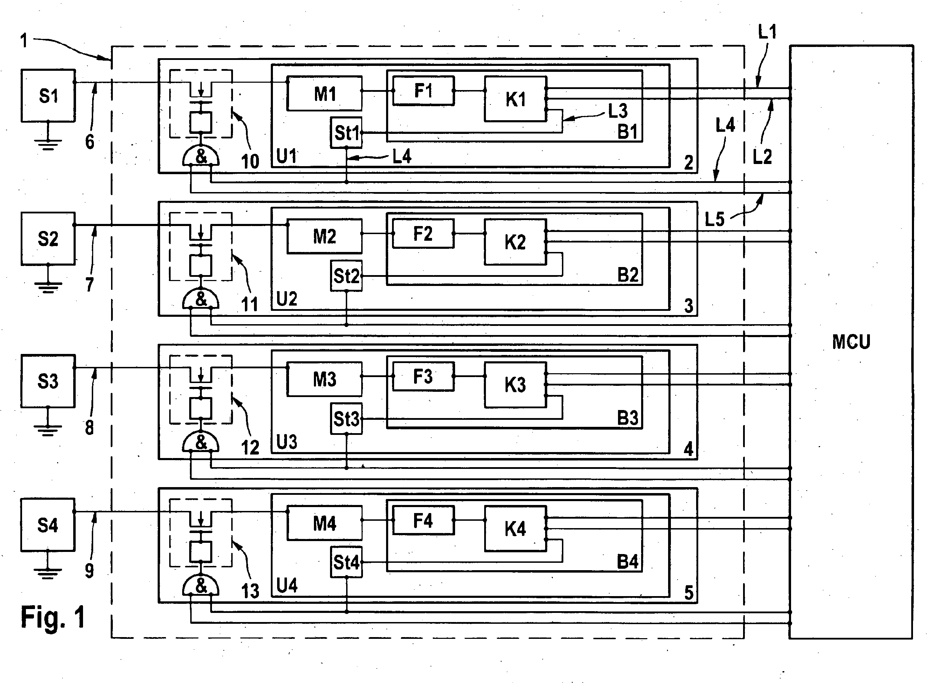

Es zeigt in schematischer Darstellung
- Fig. 1: die Anbindung der vier Raddrehzahlsensoren an jeweils eine Schaltungsanordnung zur Erkennung und Vermeidung von Überstromfehlern auf dem jeweiligen Raddrehzahlsensorkanal, sowie den schematischen Aufbau dieser Schaltungsanordnungen und die Anbindung an die elektronische Datenverarbeitungseinheit (MCU).

Fig. 1 zeigt ein Ausführungsbeispiel in dem vier Raddrehzahlsensoren S1,S2,S3,S4 über die jeweiligen Raddrehzahlsensorkanäle 6,7,8,9 an jeweils eine beispielgemäße Schaltungsanordnung 2,3,4,5 angeschlossen sind. Dabei weist Schaltungsanordnung 2,3,4,5 jeweils eine Sperrschaltung 10,11,12,13 mit jeweils einem Mos-Fet, durch dessen Drain-Source-Strecke der jeweilige Raddrehzahlsensorkanal 6,7,8,9, beziehungsweise dessen jeweilige Signalleitung, verläuft, und eine Treiberstufe zur Ansteuerung dieses Mos-FETs auf. Die Schaltungsanordnungen 2,3,4,5, beinhalten zusätzlich jeweils ein Überwachungsmodul U1,U2,U3,U4, welches jeweils eine Schaltung zur Strommessung M1,M2,M3,M4, eine Status-Treiberstufe St1,St2,St3,St4 und eine Schaltung zur Bewertung des Stroms B1,B2,B3,B4 aufweist. Diese Schaltung zur Bewertung des Stroms B1,B2,B3,B4 umfasst jeweils einen Filter F1,F2,F3,F4 und einen Komparator K1,K2,K3,K4. Das Raddrehzahlsignal des Raddrehzahlsensors S1 wird beispielgemäß über den Raddrehzahlsensorkanal 6 an Schaltungsanordnung 2 übertragen. Innerhalb der Schaltungsanordnung 2 verläuft Raddrehzahlsensorkanal 6 durch Sperrschaltung 10, wobei deren Mos-Fet im Signalpfad der Signalleitung des Raddrehzahlsensorkanals 6 liegt. Raddrehzahlsensorkanal 6 ist an Schaltung zur Strommessung M1 angeschlossen, in welcher der Strom des Raddrehzahlsensorkanals 6 gemessen wird und an Filter F1 weitergeleitet wird um kurzzeitige Stromspitzen und hochfrequente Anteile herauszufiltern. Dieses gefilterte Signal wird an Komparator K1 übertragen, der das Signal bezüglich zweier Signalschwellen bewertet, von welchem beispielhaft drei Übertragungskanäle L1,L2,L3 ausgehen. Eine erste Schwelle definiert einen Mindeststrom, wobei im Fall einer Unterschreitung dieser Schwelle über Übertragungskanal L1, der MCU ein zu geringer Strom angezeigt wird. Die zweite Schwelle definiert einen Maximalstrom, wobei im Fall einer Überschreitung dieser Schwelle, Status-Treiberstufe St1 über Übertragungskanal L3 angesteuert wird, welche ein Statussignal erzeugt, welches einen Überstrom identifiziert. Dieses Statussignal wird über Übertragungskanal L4 an die MCU übertragen. Das gefilterte Signal, dessen Amplitude oberhalb der ersten Schwelle und unterhalb der zweiten Schwelle liegt, wird über Übertragungskanal L2 an die MCU übertragen, wobei es die Raddrehzahlinformationen und Zusatzinformationen beinhaltet. Die MCU bewertet das Statussignal von Übertragungskanal L4, wobei das Anliegen einer "1" (eines High-Pegels) einen Überstrom identifiziert. Im Fall, dass eine "1" anliegt zählt ein Zähler eine definierte Anzahl an Regelungszyklen. Dabei wird seitens der MCU nur dann das Auftreten eines Überstroms gültig erkannt, wenn dieser Zähler eine definierte Anzahl an Regelungszyklen hochzählt und Dabei ständig eine "1" an Übertragungskanal L4 anliegt. In diesem Fall aktiviert die MCU insbesondere die Warnlampe mindestens eines Kraftfahrzeugregelungssystems und hinterlegt eine Fehlermeldung im Speicher. Darüber hinaus gibt die MCU eine Abschaltung des entsprechenden Raddrehzahlsensors bzw. eine Sperrung des entsprechenden Raddrehzahlsensorkanals frei. In diesem Fall erzeugt die MCU ein weiteres Statussignal "1", welches über Übertragungskanal L5 an Schaltungsanordnung 2 übertragen wird. Dort liegt dieses Signal von Übertragungskanal L5 und das Signal von Übertragungskanal L4, welcher dafür verzweigt ist, an einem UND-Gatter an, welches die Treiberstufe von Sperrschaltung 10 ansteuert, wodurch der Mos-FET von Sperrschaltung 10 in einen hochohmigen Zustand versetzt wird und/oder dieser Mos-FET sperrt. Bei Bedarf kann die MCU über Übertragungskanal L5 eine Reaktivierung des Raddrehzahlsensor S1 vornehmen, indem die MCU eine "0" über Übertragungskanal 5 an das UND-Gatter überträgt und dieses damit den Treiber von Sperrschaltung 10 so ansteuert, dass die Sperrung des Raddrehzahlsensorkanals 6 aufgehoben wird. Die Schaltungsanordnungen 2,3,4,5, sind Teil der elektronischen Leistungseinheit (PCU) 1 eines Kraftfahrzeugsteuergeräts.

Gemäß einem weiteren nicht dargestellten Ausführungsbeispiel umfasst eine Schaltungsanordnung die entsprechenden Schaltungselemente und Signalleitungen und/oder Übertragungskanäle für alle Raddrehzahlsensoren und alternativ sind zwei Schaltungsanordnungen vorhanden, welche die entsprechenden Schaltungselemente für jeweils zwei Raddrehzahlsensoren umfassen.

## Patentansprüche

1. Elektronisches Steuergerät mit einer Schaltungsanordnung (2,3,4,5), welche mit mindestens einem Raddrehzahlsensorkanal (6,7,8,9) verbindbar ist, welcher Raddrehzahlinformationen als Stromsignal überträgt, wobei die Schaltungsanordnung (2,3,4,5) mindestens ein Überwachungsmodul (U1,U2,U3,U4) für den mindestens einen Raddrehzahlsensorkanal (6,7,8,9) aufweist, wobei das mindestens eine Überwachungsmodul (U1,U2,U3,U4) so ausgelegt ist, dass dieses den Strom auf dem Raddrehzahlsensorkanal (6,7,8,9) erfasst und bewertet und wobei das mindestens eine Überwachungsmodul (U1,U2,U3,U4) eine Schaltung zur Strommessung (M1,M2,M3,M4) und eine Schaltung zur Bewertung des Stroms (E1,B2,B3,B4) aufweist sowie eine Status-Treiberstufe (St1,St2,St,3,St4), welche ein Statussignal erzeugt, welches einen Überstrom identifiziert,
**dadurch gekennzeichnet, dass**
die Schaltungsanordnung an eine elektronische Datenverarbeitungseinheit (MCU) angeschlossen ist, welche vom elektronischen Steuergerät umfasst ist und strukturell von der Schaltungsanordnung (2,3,4,5) getrennt ist und dazu ausgelegt ist, Programme abzuarbeiten, wobei ein Übertragungskanal das Statussignal an die elektronische Datenverarbeitungseinheit (MCU) überträgt,
dass der Übertragungskanal der Status-Treiberstufe (St1,St2,St3,St4) und ein Status-Übertragungskanal/eine Statusleitung der elektronischen Datenverarbeitungseinheit (MCU) an eine Auswerteschaltung angeschlossen sind,
wobei diese Auswerteschaltung mit mindestens einer Sperrschaltung (10,11,12,13) zur Sperrung des mindestens einen Raddrehzahlsensorkanals (6,7,8,9) verknüpft ist, wobei die elektronische Datenverarbeitungseinheit (MCU) dazu ausgelegt ist,
dass sie im Fall, dass das mindestens eine Statussignal mindestens einen definierten Zeitraum und/oder eine definierte Anzahl von Regelungszyklen einen Überstromfehler identifiziert, ein Abschalten dieses/dieser Raddrehzahlsensor/s/en (S1, S2, S3, S4) und/oder eine Abschaltung aller Raddrehzahlsensoren (SI, S2 , S3, S4) veranlasst,
indem die mindestens eine Sperrschaltung (10,11,12,13) des/der mindestens einen Raddrehzahlsensorkanals/kanäle (6,7,8,9) so angesteuert wird,dass der mindestens eine Raddrehzahlsensorkanal (6,7,8,9) gesperrt wird.

2. Elektronisches Steuergerät nach Anspruch 1, **dadurch gekennzeichnet, dass** die Sperrschaltung (10,11,12,13) einen, insbesondere zusätzlichen, Leistungstransistor umfasst, durch dessen Drain-Source-Strecke die elektrische Signalleitung des Raddrehzahlsensorkanals (6,7,8,9) verläuft.

3. Elektronisches Steuergerät nach mindestens einem der Ansprüche 1 oder 2, **dadurch gekennzeichnet, dass** die Schaltung zur Bewertung des Stroms (B1,B2,B3,B4) mindestens einen Filter (F1,F2,F3,F4) und mindestens einen Komparator (K1,K2,K3,K4) aufweist.

4. Elektronisches Steuergerät nach Anspruch 1, **dadurch gekennzeichnet, dass** die Auswerteschaltung durch ein UND-Gatter realisiert ist.

5. Elektronisches Steuergerät nach mindestens einem der Ansprüche 1, 3 oder 4, **dadurch gekennzeichnet, dass** diese so ausgelegt ist, dass die mindestens eine Status-Treiberstufe (St1,St2,St3,St4) bei Erzeugung eines Statussignals, welches einen Überstromfehler identifiziert, dauerhaft verriegelt wird und somit dauerhaft das entsprechende Statussignal erzeugt.

6. Verfahren zur Überwachung und Abschaltung mindestens eines Raddrehzahlsensors (S1,S2,S3,S4) mit einer Schaltungsanordnung (2,3,4,5) gemäß mindestens einem der Ansprüche 1 bis 5, wobei der mindestens eine Raddrehzahlsensor (S1,S2,S3,S4) zumindest über den Raddrehzahlsensorkanal (6,7,8,9) mit der mindestens einen Schaltungsanordnung (2,3,4,5) verbunden ist, **dadurch gekennzeichnet, dass** das mindestens eine Statussignal der jeweiligen Status-Treiberstufe (St1,St2,St3,St4) der mindestens einen Schaltungsanordnung (2,3,4,5) durch eine elektronische Datenverarbeitungseinheit (MCU), welche vom elektronischen Steuergerät umfasst ist und strukturell von der Schaltungsanordnung (2,3,4,5) getrennt ist und dazu ausgelegt ist Programme abzuarbeiten, ausgewertet wird, wobei im Fall, dass das mindestens eine Statussignal mindestens einen definierten Zeitraum und/oder eine definierte Anzahl von Regelungszyklen einen Überstromfehler identifiziert, die elektronische Datenverarbeitungseinheit (MCU) ein Abschalten dieses/dieser Raddrehzahlsensor/s/en (S1,S2,S3,S4) und/oder eine Abschaltung aller Raddrehzahlsensoren (S1,S2,S3,S4) veranlasst, insbesondere indem die mindestens eine Sperrschaltung (10,11,12,13) des/der mindestens einen Raddrehzahlsensorkanals/kanäle (6,7,8,9) so angesteuert wird, dass der mindestens eine Raddrehzahlsensorkanal (6,7,8,9) gesperrt wird.

7. Verfahren nach Anspruch 6, **dadurch gekennzeichnet, dass** die elektronische Datenverarbeitungseinheit (MCU) ein Anschalten des mindestens einen abgeschalteten Raddrehzahlsensors (S1,S2,S3,S4) veranlasst, insbesondere indem die mindestens eine Sperrschaltung (10,11,12,13) des jeweiligen Raddrehzahlsensorkanals (6,7,8,9) so angesteuert wird, dass die Sperrung des Raddrehzahlsensorkanals (6,7,8,9) aufgehoben wird.

8. Verwendung der Schaltungsanordnung (2,3,4,5) nach mindestens einem der Ansprüche 1 bis 5 und des Verfahrens nach Anspruch 6 oder 7 in Kraftfahrzeugen, insbesondere in einem Kraftfahrzeugsteuergerät.

## Claims

1. Electronic control device having a circuit arrangement (2, 3, 4, 5) which can be connected to at least one wheel speed sensor channel (6, 7, 8, 9) which transmits wheel speed information as a power signal, wherein the circuit arrangement (2, 3, 4, 5) has at least one monitoring module (U1, U2, U3, U4) for the at least one wheel speed sensor channel (6, 7, 8, 9), wherein the at least one monitoring module (U1, U2, U3, U4) is configured in such a way that it senses and evaluates the current on the wheel speed sensor channel (6, 7, 8, 9), and wherein the at least one monitoring module (U1, U2, U3, U4) has a circuit for measuring current (M1, M2, M3, M4) and a circuit for evaluating the current (B1, B2, B3, B4) as well as a status driver stage (St1, St2, St3, St4) which generates a status signal which identifies an excess current, **characterized in that**
the circuit arrangement is connected to an electronic data processing unit (MCU) which is included in the electronic control device, is structurally separate from the circuit arrangement (2, 3, 4, 5) and is configured to execute programs, wherein a transmission channel transmits the status channel to the electronic data processing unit (MCU),
**in that** the transmission channel of the status driver stage (St1, St2, St3, St4) and a status transmission channel/a status line of the electronic data processing unit (MCU) are connected to an evaluation circuit,
wherein this evaluation circuit is linked to at least one inhibiting circuit (10, 11, 12, 13) for inhibiting the at least one wheel speed sensor channel (6, 7, 8, 9),
wherein the electronic data processing unit (MCU) is configured
in such a way that in the event of the at least one status signal identifying at least one defined time period, and/or in the event of a defined number of control cycles identifying an overcurrent error, said electronic data processing unit causes this wheel speed sensor/these wheel speed sensors (S1, S2, S3, S4) to be switched off and/or causes all the wheel speed sensors (S1, S2, S3, S4) to be switched off,
**in that** the at least one inhibiting circuit (10, 11, 12, 13) of the at least one wheel speed sensor channel (6, 7, 8, 9) is actuated in such a way that the at least one wheel speed sensor channel (6, 7, 8, 9) is inhibited.

2. Electronic control device according to Claim 1, **characterized in that** the inhibiting circuit (10, 11, 12, 13) comprises an, in particular additional, power transistor through whose drain-source path the electrical signal line of the wheel speed sensor channel (6, 7, 8, 9) runs.

3. Electronic control device according to at least one of Claims 1 and 2, **characterized in that** the circuit for evaluating the current (B1, B2, B3, B4) has at least one filter (F1, F2, F3, F4) and at least one comparator (K1, K2, K3, K4).

4. Electronic control device according to Claim 1, **characterized in that** the evaluation circuit is implemented by means of an AND gate.

5. Electronic control device according to at least one of Claims 1, 3 and 4, **characterized in that** said electronic control device is configured in such a way that when a status signal which identifies an overcurrent error is generated, the at least one status driver stage (St1, St2, St3, St4) is continuously locked and therefore continuously generates the corresponding status signal.

6. Method for monitoring and switching off at least one wheel speed sensor (S1, S2, S3, S4) with a circuit arrangement (2, 3, 4, 5) according to at least one of Claims 1 to 5, wherein the at least one wheel speed sensor (S1, S2, S3, S4) is connected at least via the wheel speed sensor channel (6, 7, 8, 9) to the at least one circuit arrangement (2, 3, 4, 5), **characterized in that** the at least one status signal of the respective status driver stage (St1, St2, St3, St4) of the at least one circuit arrangement (2, 3, 4, 5) is evaluated by an electronic data processing unit (MCU) which is included in the electronic control device, is structurally separate from the circuit arrangement (2, 3, 4, 5) and is configured to execute programs, wherein in the event of the at least one status signal identifying at least one defined time period, and/or in the event of a defined number of control cycles identifying an overcurrent error, the electronic data processing unit (MCU) causes this wheel speed sensor/these wheel speed sensors (S1, S2, S3, S4) to be switched off and/or causes all the wheel speed sensors (S1, S2, S3, S4) to be switched off, in particular **in that** the at least one inhibiting circuit (10, 11, 12, 13) of the at least one wheel speed sensor channel (6, 7, 8, 9) is actuated in such a way that the at least one wheel speed sensor channel (6, 7, 8, 9) is inhibited.

7. Method according to Claim 6, **characterized in that** the electronic data processing unit (MCU) causes the at least one switched-off wheel speed sensor (S1, S2, S3, S4) to be switched on, in particular **in that** the at least one inhibiting circuit (10, 11, 12, 13) of the respective wheel speed sensor channel (6, 7, 8, 9) is actuated in such a way that the inhibiting of the wheel speed sensor channel (6, 7, 8, 9) is cancelled.

8. Use of the circuit arrangement (2, 3, 4, 5) according to at least one of Claims 1 to 5 and the method according to Claim 6 or 7 in motor vehicles, in particular in a motor vehicle control device.

## Revendications

1. Appareil électronique de commande doté d'un circuit (2, 3, 4, 5) apte à être relié à au moins un canal (6, 7, 8, 9) de capteur de vitesse de rotation de roue qui transfère sous la forme d'un signal de courant des informations sur la vitesse de rotation de la roue,
le circuit (2, 3, 4, 5) présentant au moins un module de surveillance (U1, U2, U3, U4) du ou des canaux (6, 7, 8, 9) de capteur de vitesse de rotation de roue,
le ou les modules de surveillance (U1, U2, U3, U4) étant conçus pour saisir le courant présent sur le canal (6, 7, 8, 9) de capteur de vitesse de rotation de roue et l'évaluer,
le ou les modules de surveillance (U1, U2, U3, U4) présentant un circuit (M1, M2, M3, M4) de mesure de courant et un circuit (B1, B2, B3, B4) d'évaluation du courant ainsi qu'un étage pilote (St1, St2, St3, St4) de statut qui forme un signal de statut qui identifie la présente d'un sur-courant,
**caractérisé en ce que**
le circuit est raccordé à une unité électronique (MCU) de traitement de données qui est incluse dans l'appareil électronique de commande mais est séparée structurellement du circuit (2, 3, 4, 5) et est conçue pour exécuter des programmes,
**en ce qu'**un canal de transfert transfère le signal de statut à l'unité électronique (MCU) de traitement de données,
**en ce que** le canal de transfert de l'étage pilote (St1, St2, St3, St4) de statut et un canal de transfert de statut ou un conducteur de statut de l'unité électronique (MCU) de traitement de données sont raccordés à un circuit d'évaluation,
**en ce que** ce circuit d'évaluation est associé au moins un circuit de blocage (10, 11, 12, 13) qui bloque le ou les canaux (6, 7, 8, 9) de capteur de vitesse de rotation de roue,
**en ce que** l'unité électronique (MCU) de traitement de données est conçue pour, au cas où le ou les signaux de statut identifient une erreur de sur-courant pendant au moins une durée définie et/ou sur un nombre défini de cycles de régulation, lancer un débranchement du ou des capteurs (S1, S2, S3, S4) de vitesse de rotation de roue et/ou un débranchement de tous les capteurs (S1, S2, S3, S4) de vitesse de rotation de roue en commandant au circuit ou aux circuits de blocage (10, 11, 12, 13) du ou des canaux (6, 7, 8, 9) de capteur de vitesse de rotation de roue de bloquer ou les canaux (6, 7, 8, 9) de capteur de vitesse de rotation de roue.

2. Appareil électronique de commande selon la revendication 1, **caractérisé en ce que** le circuit de blocage (10, 11, 12, 13) comporte un transistor de puissance, notamment un transistor de puissance supplémentaire dont le conducteur électrique de signaux du canal (6, 7, 8, 9) de capteur de vitesse de rotation de roue traverse le parcours drain-source.

3. Appareil électronique de commande selon au moins l'une des revendications 1 ou 2, **caractérisé en ce que** le circuit (B1, B2, B3, B4) d'évaluation de courant présente au moins un filtre (F1, F2, F3, F4) et au moins un comparateur (K1, K2, K3, K4).

4. Appareil électronique de commande selon la revendication 1, **caractérisé en ce que** le circuit d'évaluation est configuré sous la forme d'une grille ET.

5. Appareil électronique de commande selon au moins l'une des revendications 1, 3 ou 4, **caractérisé en ce qu'**il est conçu pour verrouiller le ou les étages pilotes (St1, St2, St3, St4) de statut de manière permanente lors de la formation d'un signal de statut qui identifie une erreur de sur-courant et pour former ainsi de manière permanente le signal de statut correspondant.

6. Procédé de surveillance et de débranchement d'au moins un capteur (S1, S2, S3, S4) de vitesse de rotation de roue à l'aide d'un circuit (2, 3, 4, 5) selon au moins l'une des revendications 1 à 5, dans lequel le ou les capteurs (S1, S2, S3, S4) de vitesse de rotation de roue sont reliés au moins par le canal (6, 7, 8, 9) de capteur de vitesse de rotation de roue au circuit ou aux circuits (2, 3, 4, 5),
**caractérisé en ce que**
le ou les signaux de statut de chaque étage pilote (St1, St2, ST3, St4) de statut du ou des circuits (2, 3, 4, 5) sont évalués par une unité électronique (MCU) de traitement de données incluse dans l'appareil électronique de commande mais séparée structurellement du circuit (2, 3, 4, 5) et conçue pour exécuter des programmes et
**en ce qu'**au cas où le ou les signaux de statut identifient une erreur de sur-courant pendant au moins une durée définie et/ou sur un nombre défini de cycles de régulation, l'unité électronique (MCU) de traitement des données lance un débranchement du ou des capteurs (S1, S2, S3, S4) de vitesse de rotation de roue et/ou un débranchement de tous les capteurs (S1, S2, S3, S4) de vitesse de rotation de roue, en particulier en commandant au circuit ou aux circuits de blocage (10, 11, 12, 13) du ou des canaux (6, 7, 8, 9) de capteur de vitesse de rotation de roue de bloquer ou les canaux (6, 7, 8, 9) de capteur de vitesse de rotation de roue.

7. Procédé selon la revendication 6, **caractérisé en ce que** l'unité électronique (MCU) de traitement de données lance un branchement du ou des capteurs (S1, S2, S3, S4) de vitesse de rotation de roue qui ont été débranchés en particulier en commandant au circuit ou aux circuits de blocage (10, 11, 12, 13) du canal correspondant (6, 7, 8, 9) de capteur de vitesse de rotation de roue de supprimer le blocage du canal (6, 7, 8, 9) de capteur de vitesse de rotation de roue.

8. Utilisation du circuit (2, 3, 4, 5) selon au moins l'une des revendications 1 à 5 et du procédé selon les revendications 6 ou 7 dans des véhicules automobiles et en particulier dans un appareil de commande du véhicule automobile.
